# EUROPEAN PATENT SPECIFICATION

(11) **EP 3 749 841 B1**
(45) Date of publication and mention of the grant of the patent: **14.06.2023**
(21) Application number: 19705403.4
(22) Date of filing: 05.02.2019
(51) Int. Cl.: F01K 13/02, F01K 23/06

(54) **SYSTEM AND METHOD FOR WASTE HEAT RECOVERY IN STEEL PRODUCTION FACILITIES**
SYSTEM UND VERFAHREN ZUR ABWÄRMERÜCKGEWINNUNG IN STAHLERZEUGUNGSANLAGEN
SYSTÈME ET PROCÉDÉ DE RÉCUPÉRATION DE CHALEUR PERDUE DANS DES INSTALLATIONS DE PRODUCTION D'ACIER

(30) Priority: 05.02.2018 SE 1850128
(43) Date of publication of application: 16.12.2020
(73) Proprietor: Climeon AB, 164 40 Kista (SE)
(72) Inventor: SACHITANAND, Rakshith, 165 61 Hässelby (SE); ERIKSSON, Daniel, AX 22100 MARIEHAMN (FI)
(74) Representative: Bergenstråhle & Partners AB
(86) International application number: PCT/SE2019/050096
(87) International publication number: WO 2019/151938

(56) References cited:
- JP-A- S5 273 109
- JP-A- S5 665 918
- JP-A- S5 977 083
- US-A1- 2009 293 478
- US-A1- 2014 224 469
- US-B2- 8 627 663

## Description

### Technical field

The present invention relates generally to a system and method for recovering waste heat from a cooling arrangement in a steel production facility to generate electricity.

### Background of the Invention and prior art

The steel industry is responsible for about 7% of global CO₂ emissions, hence there are considerable efforts needed to achieve a more environmentally friendly operation. Energy losses in the form of heat may equal up to 40 % of the primary input energy of a steel plant. Utilization of this waste presents an opportunity to capitalize on these losses. However, traditional waste heat recovery systems require major investments and substantial design changes to existing production processes making them less feasible.

Analysis of waste heat available in steel plants reveals many sources which have the potential for power production. Considerable waste heat is found at high temperatures such as in exhaust gas streams. Additionally, significant volumes are found in cooling water loops for various processes. Whereas exhaust gas streams are the most commonly addressed sources for heat recovery, the potential value of the heat contained in water appears to be even greater. Water, in its abundance throughout cooling systems in steel production, represents an important source to address as it presents the simplest application for converting waste heat to power.

In steel mills, reheating furnaces of the walking beam or pusher type are used extensively to bring the feedstock up to temperature before mechanically forming it to a specified profile, i.e. rolling. The temperature in the furnace is usually maintained at 1100-1300 °C depending on process requirements. The elements are transported through the furnace on skids which mechanically advance the element through the furnace. These skids are cooled internally with water in order to keep the material temperature at acceptable levels. Between 10% and 17% of the primary energy input to the reheating furnace is lost to the cooling water in the skid pipes, that support the feedstock within the furnace.

Skid pipe cooling is typically performed using water from a cooling tower. When liquid water is used in the skid pipe cooling loop, the requirement is that the cooling media should remain in the liquid phase as steam formation would reduce the cooling effect. The temperature of this cooling water is usually not a matter of active choice but decided instead by the cooling tower specification and is typically in the range of 10-40 °C.

The rejection of high-temperature heat to low-temperature cooling water represents a lost opportunity to recover high-quality energy. Little to no focus has been placed on this area, primarily because of a lack of commercially viable low-temperature energy conversion technologies.

Further, in order to protect the skid pipes from the high temperatures of the steel, the pipes are traditionally covered by a refractory. Said refractory is brittle and a high-temperature difference between the cooling water and the steel might create cracks in the refractory. Thus, the maintenance cost of the skid pipes can be high because of the need for mending or remaking the refractory.

Traditionally, waste heat recovery solutions require temperatures between 150 °C and 600 °C with technologies such as steam turbines and high-temperature ORC (Organic Rankine Cycle) systems to generate electrical power.

US 4,417,871 discloses an apparatus for cooling the skid pipes of a continuous slab reheating furnace by the circulation of pressurized hot water through the skid pipes where the hot water is heated to even higher temperatures, to about 200 °C. The heated hot water is relatively cooled to about 190 °C by passage through a heat exchanger, after which the relatively cooler hot water is recirculated to the skid pipes. Means are provided for keeping the hot water under a pressure sufficient to maintain the hot water in a liquid state and prevent its evaporation into steam, as the hot water circulates through the apparatus, especially the skid pipes of the furnace. However, US 4,417,871 does not provide a solution for effectively exploiting the recovered heat, e.g. to generate electrical power, but merely teaches to heat other fluids through the heat exchanger and requires high pressure and temperature.

Recent developments have led to the commercialization of conversion technologies that can operate at lower temperatures, down to 70 °C. The biggest challenge while working with temperatures below 100 °C is the low quality of energy within this temperature range which dictates that the process must be extremely efficient with little to no losses to facilitate profitable conversion. Often, the parasitic load associated with the generation of power from low-temperature heat makes this an economically unfeasible option.

There exist a number of methods for converting low-temperature heat into electricity by utilizing the phase change energy of a working medium produced in a thermodynamic Rankine cycle. For instance, WO 2012/128715 and US8627663 disclose such a heat conversion system including a power generation module. The power generation module comprises a turbine/generator, an evaporator, a condenser and a main pump, and a working medium is circulated through the module.

Hence, there is a need to develop improved solutions and methods of recovering waste heat from steel production facilities, specifically reheating furnaces used in steel rolling, to generate electrical power.

### Summary of invention

An object of the present invention is to provide an improved apparatus and method for overcoming all or some of the disadvantages and problems described above in connection with the state of the art.

This object is achieved by the present invention, wherein in a first aspect defined by the features of claim 1 and provides inter alia a system for recovery of thermal energy from a first closed cooling loop for cooling skid pipes in a steel production facility, said first closed cooling loop comprising a circulation fluid which receives thermal energy from said skid pipes, and a cooling source, wherein said system comprises: means for measuring the temperature in said first closed cooling loop, and a power conversion module configured to work in a closed loop thermodynamic cycle and convert thermal energy into electricity, wherein said power conversion module is arranged in the first closed cooling loop in fluid communication with the cooling source; wherein the power conversion module further comprises a flow control system arranged to control input of thermal energy into said power conversion module, wherein said flow control system is arranged to cut off said cooling source from said first closed cooling loop when a measured temperature in said first closed cooling loop is below a first predetermined threshold temperature, such that said circulation fluid is directed to a hot side of said power conversion module only, to provide a thermal energy input into said power conversion module.

By means of the system, waste heat from the steel production facility, such as e.g. a reheating furnace, can be recovered and used to generate electrical power. Since the power conversion module requires a minimum temperature to operate efficiently, the flow control system ensures that the minimum temperature is reached by cutting off the cooling source from the first closed cooling loop when the temperature is below a predetermined threshold temperature. In other words, if the temperature in the first closed cooling loop is too low, the flow control system returns the circulation fluid directly to the heat exchanger, bypassing the cooling source, such that the temperature may be increased through one or more additional passes through the heat exchanger. Furthermore, the system according to the present invention can easily be incorporated into an existing skid cooling loop with minimal integration, using the existing infrastructure to reduce the required investment and installation time.

In a preferred embodiment, the flow control system is further arranged to direct fluid flow between said cooling source and a cold side of said power conversion module in a second closed cooling loop, fluidly separate from said first closed cooling loop, when the measured temperature in said first closed cooling loop is above said first predetermined threshold temperature. The first predetermined threshold temperature may be in the range 65-95 °C, preferably about 70 °C. When the temperature in the first closed cooling loop, and thus, the power conversion module, reaches its operating temperature, the power conversion module starts generating electricity by extracting thermal energy from the heated water in the first closed cooling loop. The extraction of thermal energy reduces the temperature of the water which is then returned to the heat exchanger. At the same time, the power conversion module is cooled by the cooling source to ensure proper operation. The generated electricity can replace existing input energy sources and thereby reduce emissions of carbon dioxide.

In another embodiment said flow control system is further arranged to cut off said cooling source and said power conversion module from said first closed cooling loop, such that said circulation fluid is directed to flow in a second shorter closed cooling loop, to provide a thermal energy input from said skid pipes into said second closed cooling loop.

By means of this embodiment, the time for establishing a required initial temperature increase on the cooling fluid may be decreased. This may, for example, be an advantage when the initial temperature of the cooling fluid is below a certain temperature. Further, when increasing the temperature of the cooling fluid the temperature difference between the steel and the cooling fluid is decreased and the risk of creating cracks in the refractory due to the temperature difference is decreased.

In an advantageous embodiment, the flow control system is further arranged to cut off said power conversion module from said first closed cooling loop and said cooling source when the measured temperature in said first closed cooling loop is above a second predetermined threshold temperature (T_{STOP}), such that said circulation fluid is directed to said cooling source only. The second predetermined threshold temperature may be in the range 110-140 °C, preferably about 120 °C. When the temperature in the first closed cooling loop, and thus, the power conversion module, exceeds the operating range of the power conversion module, the power conversion module is cut off from the first closed cooling loop, such that the heated fluid flows directly to the cooling source to be cooled before returning to the heat exchanger. This provides a safety function to ensure that the cooling arrangement for the skid pipes remains intact when the power conversion module exceeds its operating range.

In an alternative embodiment, the circulation fluid is water. By using water as circulation fluid, the system does not require any substitution of the components or reconfiguration of the existing infrastructure.

In a further advantageous embodiment, the flow control system comprises conduits for connecting the power conversion module to the first closed cooling loop and the cooling source, and valves for selectively closing and opening the conduits to direct fluid therein. At least some of the conduits and valves may for example form at least a part of the second closed cooling loop. The conduits and valves provide simple and reliable means for installing the power conversion module in an existing skid cooling loop and controlling the fluid flow therein.

In a second aspect of the invention defined by the features of claim 8, there is provided a steel production facility comprising skid pipes for supporting feedstock to be heated, a first closed cooling loop comprising a circulation fluid which receives thermal energy from said skid pipes, a cooling source, and a system for recovery of thermal energy according to the first aspect.

In a preferred embodiment, the steel production facility further comprises a skid pipe heat transferring loop comprising a circulation fluid running through said skid pipes and a heat exchanger arranged to transfer thermal energy between said skid pipe heat transferring loop and said first closed cooling loop. In cases where the steel production facility comprises a pre-existing infrastructure for transferring thermal energy between two separate loops via a heat exchanger, the system according to the present invention may utilise this infrastructure in an efficient manner.

In a third aspect of the invention defined by the features of claim 10, there is provided a method for controlling input of thermal energy into a power conversion module configured to work in a closed loop thermodynamic cycle and convert thermal energy into electricity, wherein said method comprises the steps of: arranging said power conversion module in fluid communication with a first closed cooling loop comprising a circulation fluid which receives thermal energy from skid pipes in a steel production facility, and a cooling source arranged in said first closed cooling loop; measuring a temperature in said first closed cooling loop; and when said measured temperature is below a first predetermined threshold temperature, cutting off said cooling source from said first closed cooling loop, such that said circulation fluid flows into a hot side of said power conversion module only, to provide a thermal energy input into said power conversion module.

In a preferred embodiment, the method further comprises the step of: when said measured temperature is above said first predetermined threshold temperature, directing a fluid flow from said cooling source to said power conversion module in a second closed cooling loop, fluidly separated from said first closed cooling loop.

In an alternative embodiment, the method further comprises the step of: when said measured temperature is above a second predetermined threshold temperature, cutting off said power conversion module from said first closed cooling loop and said cooling source, such that said circulation fluid is directed to said cooling source only.

### Brief description of drawings

The invention is now described, by way of example, with reference to the accompanying drawings, in which:
Figs. 1a and 1b show schematic views of conventional cooling arrangements in a steel production facility;
Figs. 2a and 2b show schematic views of cooling arrangements in a steel production facility comprising a system for recovery of thermal energy according to the present invention in an initial warmup phase;
Figs. 2c and 2d show schematic views of additional embodiments of cooling arrangements in a steel production facility comprising a system for recovery of thermal energy according to the present invention in an initial warmup phase
Fig. 3 shows a schematic view of a cooling arrangement in a steel production facility comprising a system for recovery of thermal energy according to the present invention in an operating phase;
Fig. 4 shows a schematic view of a cooling arrangement in a steel production facility comprising a system for recovery of thermal energy according to the present invention in a stopped phase; and
Fig. 5 shows a schematic view of a thermodynamic closed-loop cycle illustrating the working principle of an exemplary power generation module which may be to employed in the present invention.

### Detailed description of embodiments

In the following, a detailed description of an improved system and method of recovering waste heat from steel production facilities, to generate electrical power in accordance with the present invention is provided.

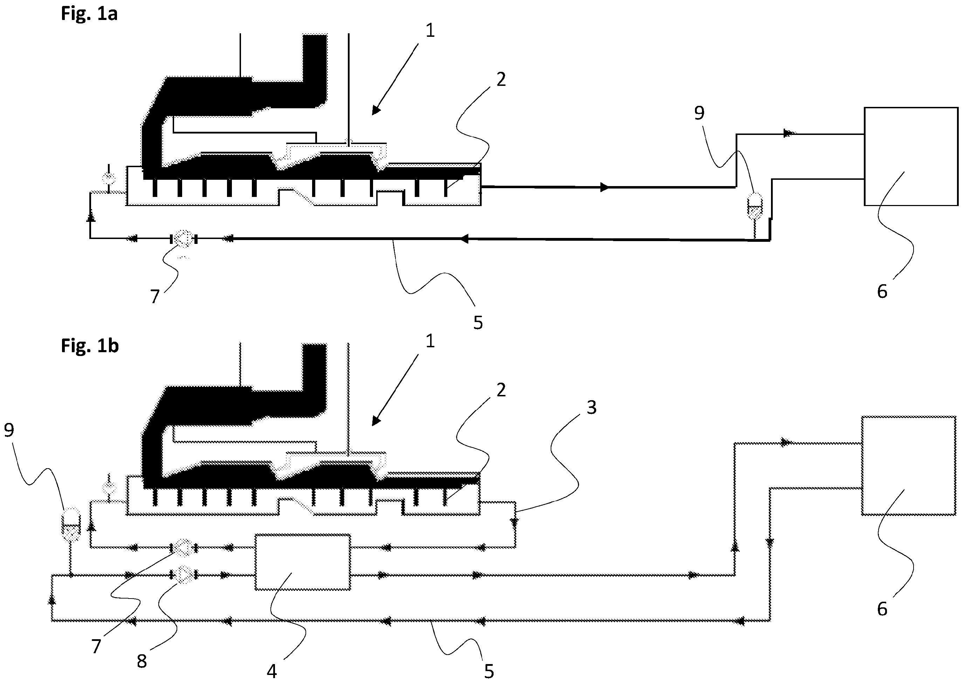

Figs. 1a and 1b illustrate a steel production facility 1, for instance, a reheating furnace of the walking beam or pusher type used in steel rolling, including a cooling arrangement. Such reheating furnaces are used extensively in steel mills to bring the feedstock up to temperature before mechanically forming it to a specified profile. The temperature in the furnace is usually maintained at 1100-1300 °C depending on process requirements. The elements, also called blooms, are transported through the furnace on skids 2 which mechanically advance the element through the furnace. The skids 2 are covered with refractory material and cooled internally with fluid (water) in order to keep the material temperature at acceptable levels. The skid pipes 2 are interconnected in a loop to transfer the heat away from the skids 2. In the cooling arrangement shown in Fig. 1a, the skid pipes 2 are connected in a first closed cooling loop 5 and the fluid is circulated by means of a pump 7 between the skid pipes 2 and a cooling source 6 for cooling, e.g. a cooling tower.

Fig. 1b illustrates another exemplary cooling arrangement, wherein the skid pipes 2 are connected in a skid pipe heat transferring loop 3, fluidly separated from the first closed cooling loop 5. In this case, thermal energy is transferred indirectly from the skid pipes 2 by means of a heat exchanger 4, arranged between the skid pipe heat transferring loop 3 and the first closed cooling loop 5 comprising the cooling source 6. As mentioned above, the temperature of the circulation fluid (water) in the first closed cooling loop 5 is generally in the range 10-40 °C. The heat transferred from the skid pipe heat transferring loop 3 typically raises the temperature of the water in the first closed cooling loop 5 by about 10 °C to keep the temperature of the skids 2 in the furnace at an acceptable level.

Each of the skid pipe heat transferring loop 3 and the first closed cooling loop 5 comprises a pump 7 and 8, respectively, to circulate the respective fluids therein. The direction of flow may either be parallel-flow, counter-flow, or cross-flow. In the present example, the flow paths are countercurrent as indicated by the arrows. The first closed cooling loop 5 may further comprise an expansion chamber 9 to allow for expansion of the water with increased temperatures.

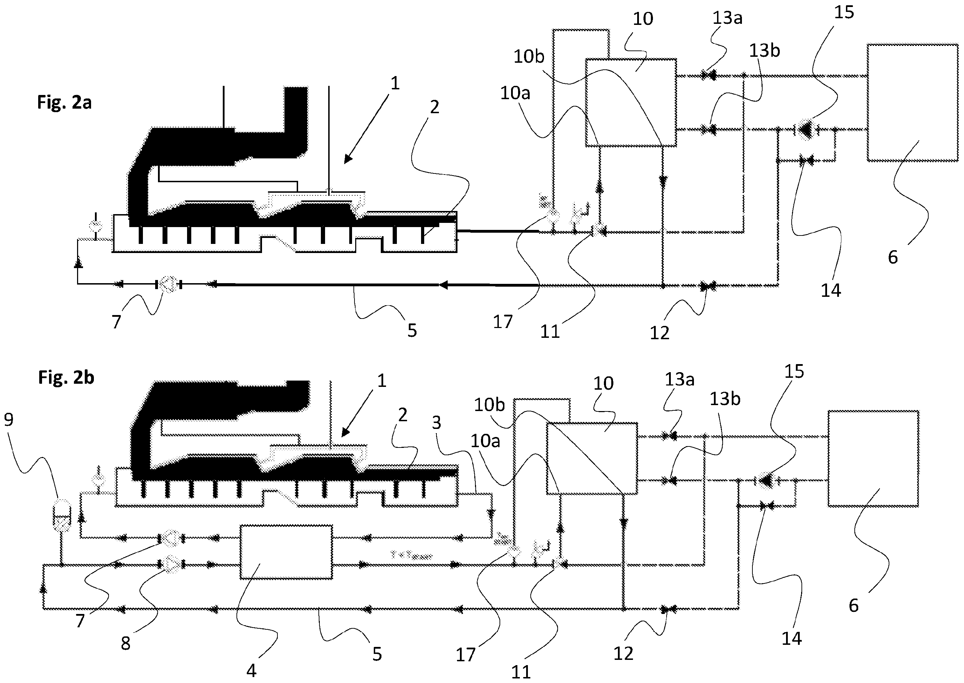

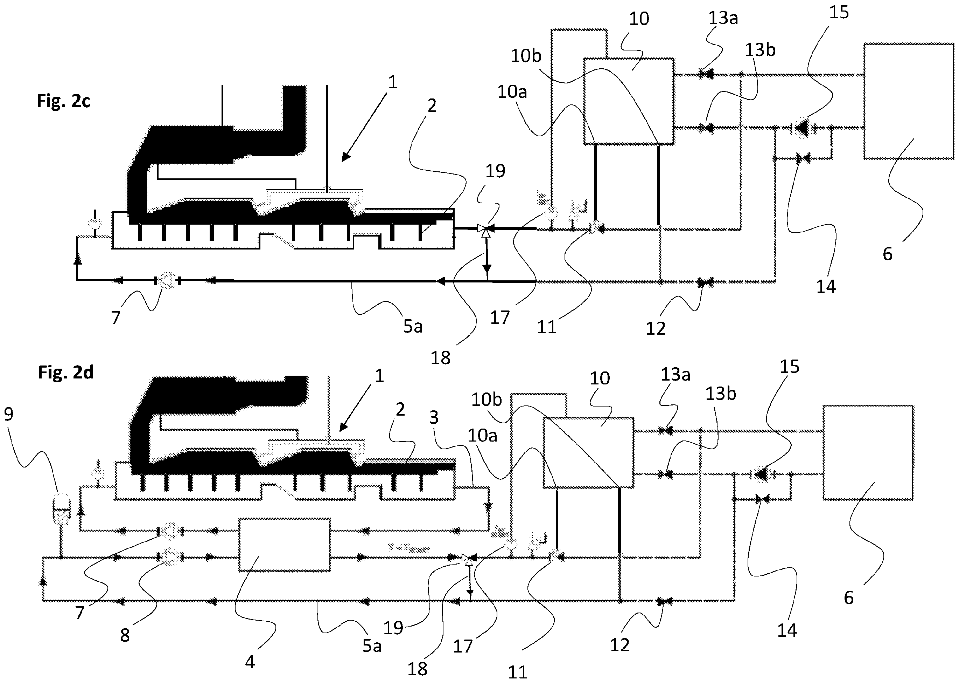

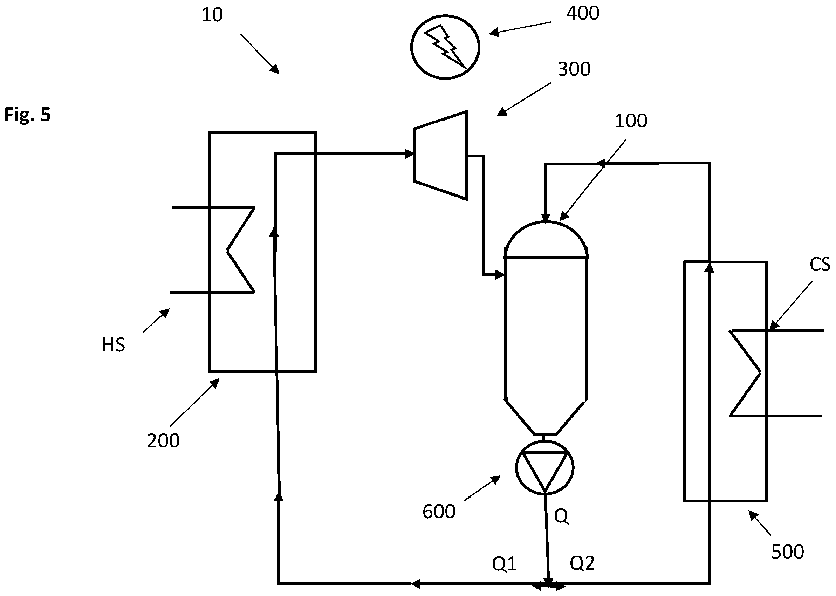

Turning now to Figs. 2-4, a system for recovery of thermal energy in a steel production facility 1 according to the present invention is illustrated. The system comprises a power conversion module 10 configured to work in a closed loop thermodynamic cycle and convert thermal energy extracted from said first closed cooling loop 5 into electricity. One example of such a power conversion module 10 is described further below in connection with Fig. 5. The power conversion module 10 is arranged in the first closed cooling loop 5 in fluid communication with both the heat exchanger 4 and the cooling source 6, and comprises a flow control system including valves 11, 12, 13a, 13b, 14 and additional conduits for connecting respective hot and cold sides of the power conversion module 10 with the first closed cooling loop 5 and the cooling source 6, respectively. In addition, the power conversion module 10 comprises means (not shown) for measuring the temperature T in the first closed cooling loop 5.

More specifically, the inlet 10a to the hot side of the power conversion module 10 is connected to the first closed cooling loop 5 downstream of the heat exchanger 4 and upstream of the cooling source 6, whereas the outlet 10b of the hot side of the power conversion module 10 is connected to the first closed cooling loop 5 downstream of the cooling source 6 and upstream of the heat exchanger 4. Similarly, the inlet 10c to the cold side of the power conversion module 10 is connected to the cooling source 6 upstream of the heat exchanger 4 and the outlet 10d of the cold side of the power conversion module 10 is connected to the cooling source 6 downstream of the heat exchanger 4. In addition, valves 11, 12, 13a, 13b, 14 to control and direct the flow between the power conversion module 10 and the first closed cooling loop 5 and the cooling source 6 are provided, such as e.g. three-way valves, return valves etc. as known in the art. Depending on the operation mode, the flow of fluid (water) in the first closed cooling loop 5 may be controlled, such that the different components may be cut off/bypassed, separated, or connected as will be explained below.

In order to be able to convert thermal energy into electricity, the power conversion module 10 requires a minimum threshold temperature of about 70 °C, preferably the temperature should be in the range 80-120 °C. Hence, in an initial start-up or warm-up phase, the temperature of the fluid in the first closed cooling loop 5 needs to be raised from the typical 10-40 °C. This mode of operation is illustrated in Figs. 2a and 2b in relation to the two cooling arrangements shown in Figs. 1a and 1b, respectively. When the temperature T in the first closed cooling loop 5 is below a first predetermined threshold temperature T_{START}, the flow control system redirects the flow to cut off the cooling source 6 from the first closed cooling loop 5. The three-way valve 11 is set (indicated in white) to direct the flow of heated water from the heat exchanger 4 to the inlet 10a into the hot side of the power conversion module 10, and the valve 12 is closed (indicated in black), such that the water from the outlet 10b from the hot side of the power conversion module 10 returns back to the heat exchanger 4 (flow path indicated by the arrows) without passing through the cooling source 6 (indicated by the hatched lines). At the same time, the conduits between the power conversion module 10 and the cooling source 6 remain closed (valves 13a, 13b indicated in black). With each passage through the heat exchanger 4, and in the absence of cooling, the temperature T of the water is raised until it reaches the first predetermined threshold temperature T_{START}.

Since water vapour has a lower specific heat capacity than water, i.e. lower cooling effect, it is important that the circulation fluid in the first closed cooling loop 5 is kept in liquid form. In order to prevent vaporisation of the circulation fluid, the pressure in the first closed cooling loop 5 should be maintained at about 2 bar for the temperature range 80-120 °C. Of course, at higher pressure, the temperature range could be increased without risking vaporisation. However, a pressure of about 2 bar is conventionally employed in cooling arrangements in steel production facilities and is considered optimal for the system according to the present invention.

In another embodiment of the system, as disclosed in figures 2c and 2d, an additional piping 18 and an additional three-way valve 19 is arranged to cut off the cooling source 6 and the power conversion module 10 from first closed cooling loop 5. Hereby the circulation fluid is directed to flow in a second shorter closed cooling loop 5a, wherein the thermal energy input from said skid pipes 2 is more quickly heating up the circulation fluid in said second closed cooling loop 5a. Thus, the warm-up phase of the circulation fluid may be shortened. If for example, the temperature of the circulation fluid is less than for example 10 °C this quick initial warm-up of the circulation fluid may be necessary. The quick warm-up may of course also be required for other reasons than extra low temperature of the circulation fluid.

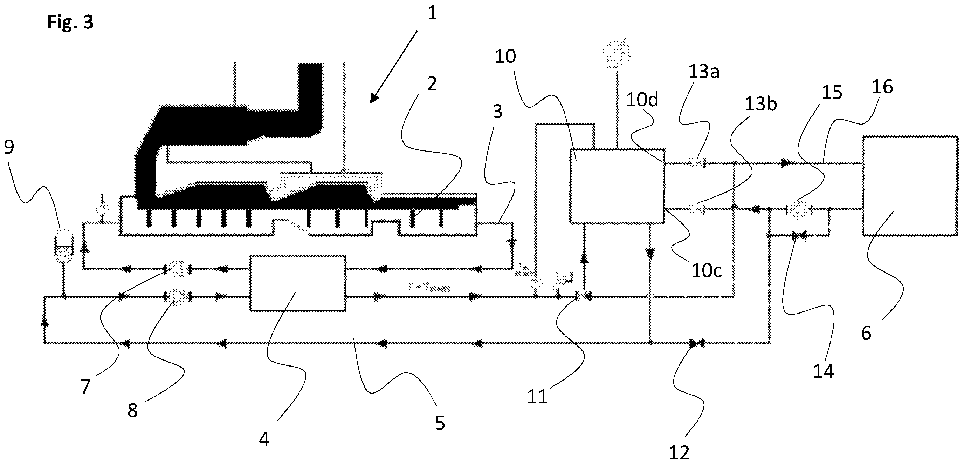

When the temperature T in the first closed cooling loop 5 is above or equal to the first predetermined threshold temperature T_{START}, the power conversion module 10 switches to an operating mode wherein thermal energy is extracted from the heated water in the first closed cooling loop 5 and converted to electricity. This operating mode is illustrated in Fig. 3. Here, the flow control system maintains the setting of valves 11 and 12, such that the heated water continues to circulate between the heat exchanger 4 and the hot side of the power conversion module 10. At the same time, the conduits between the cold side of the power conversion module 10 and the cooling source 6 are opened (valves 13a, 13b indicated in white), such that a second closed cooling loop 16 is created therebetween, separate from the first closed cooling loop 5 between the heat exchanger 4 and the hot side of the power conversion module 10. Circulation in this second closed cooling loop 16, as shown by the arrows, may be supplemented by an additional pump 15 (indicated in white). In this operating mode, the heated water from the heat exchanger 4 is cooled indirectly in the power conversion module 10. The extracted thermal energy is used to heat a working medium in the power conversion module 10 to generate electricity, whereas the working medium is cooled by the cooling source 6 connected to the cold side of the power conversion module 10.

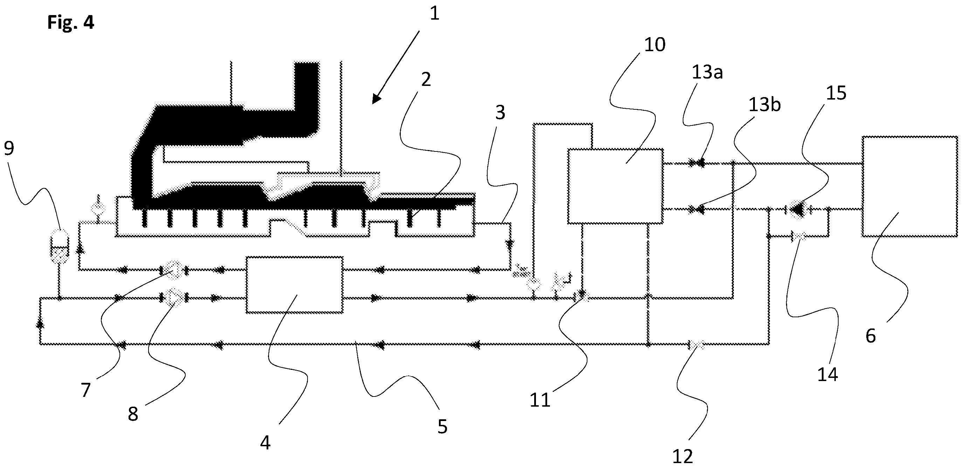

In order to ensure optimal working conditions and prevent vaporisation, the flow control system may also be configured to bypass the power conversion module 10 if the temperature T in the first closed cooling loop 5 increases above a second predetermined threshold temperature T_{STOP}, e.g. beyond the operating range 80-120 °C (at pressure 2 bar) of the power conversion module 10 as defined above. This operating mode of the system is illustrated in Fig. 4 and resembles the flow path in the conventional cooling arrangement shown in Fig. 1. Here, the three-way valve 11 is set (indicated in white) to direct the heated water from the heat exchanger 4 to the cooling source 6 without flowing through the hot side of the power conversion module 10. The conduits between the cold side of the power conversion module 10 and the cooling source 6 are similarly closed (valves 13a, 13b indicated in black), such that the power conversion module 10 is completely cut off from the first closed cooling loop 5. Instead, the flow path from the cooling source 6 returns directly to the heat exchanger 4 through the open valves 12, 14 (indicated in white).

By controlling the flow paths of the system as explained above, the waste heat from the reheating furnace may be extracted and used to generate electricity. It is estimated that about 10% of the thermal energy may be converted to electrical energy without affecting the manufacturing process. The difference in temperature between the furnace atmosphere (about 1300 °C) and the cooling water is so substantial that changing the cooling temperature from 20 °C to 100 °C produces the same cooling effect without any impact on the manufacturing process. This is due to the specific heat capacity of water in liquid form only changing marginally between 20 °C and 100 °C. In other words, the cooling capacity of the water in liquid form is substantially the same, regardless of the temperature.

As mentioned above, a heat conversion system utilising a thermodynamic closed-loop system to convert heat into energy is disclosed in WO 2012/128715. A similar heat conversion system comprising a power generation module is visualized in Fig. 5.

Fig. 5 shows a schematic view illustrating the working principle of an exemplary power generation module. Said power generation module is arranged to convert low-temperature heat into electricity by utilizing the phase change energy of a working medium produced in a thermodynamic cycle. The thermodynamic closed loop cycle may be a Rankine cycle, Organic Rankine Cycle, Kalina cycle or any other known thermodynamic closed loop power generating processes converting heat into power. The power generation module comprises a turbine 300, a generator 400, a hot source (HS) heat exchanger 200, a condensation device 100, and a pump 600, and a working medium is circulated through the module. The main pump in the power generation module is located directly below the condenser vessel. The working fluid is heated in the hot source heat exchanger 200, also called evaporator, to vaporisation by an incoming hot source, e.g. the heated water in the first closed cooling loop 5. The hot gaseous working fluid is then passed to the turbine 300 which drives the generator 400 for production of electrical energy. The expanded hot working fluid, still in gaseous form, is then fed into the condensation device 100 to be converted back to liquid form before being recirculated to the HS heat exchanger 200 to complete the closed-loop cycle 100, as shown on the left-hand side of Fig. 5.

The condensation device may in one embodiment be a vessel 100 or container 100 which has a generally cylindrical shape. The liquid composition of the working medium is evacuated through a bottom section of the condensation device 100 by means of a centrifugal pump 600. The stream of liquid medium Q may be separated into two streams Q1, Q2, wherein a first, bigger stream Q1 is recirculated through a first conduit to the HS heat exchanger 200 and a second, smaller stream Q2 is fed through a second conduit to a cold source (CS) heat exchanger 500 to be cooled before being led back to a top section condensation device 100. The cold source is the cooling source 6 connected to the power conversion module 10 in the second closed cooling loop 16, and the heat energy given off by the second stream Q2 may be used in different applications.

In another embodiment, the condensation of the working medium takes place directly in the CS heat exchanger 500 which then can be said to be the condensation device. In this embodiment, the entire stream of liquid medium Q may be guided directly back to the HS heat exchanger 200.

## Claims

1. A system for recovery of thermal energy from a first closed cooling loop (5) for cooling skid pipes (2) in a steel production facility (1), said first closed cooling loop (5) comprising a circulation fluid which receives thermal energy from said skid pipes (2), and a cooling source (6), wherein said system comprises:
- means (17) for measuring the temperature (T) in said first closed cooling loop (5),
- a power conversion module (10) configured to work in a closed loop thermodynamic cycle and convert thermal energy into electricity, wherein said power conversion module (10) is arranged to be connected to the first closed cooling loop (5) in fluid communication with the cooling source (6);
wherein the power conversion module (10) further comprises a flow control system arranged to control input of thermal energy into said power conversion module (10), **characterized in that** the flow control system comprises conduits for connecting the power conversion module (10) to the first closed cooling loop (5) and the cooling source (6), and valves (11, 12, 13a, 13b, 14) for selectively closing and opening the conduits to direct flow of said circulation fluid therein, wherein said flow control system is arranged to cut off said cooling source (6) from said first closed cooling loop (5) when a measured temperature (T) in said first closed cooling loop (5) is below a first predetermined threshold temperature (T_{START}), such that said circulation fluid is directed exclusively to a hot side of said power conversion module (10), to provide a thermal energy input into said power conversion module (10).

2. The system according to claim 1, wherein said flow control system is further arranged to direct fluid flow between said cooling source (6) and a cold side of said power conversion module (10) in a second closed cooling loop (16), fluidly separate from said first closed cooling loop (5), when the measured temperature (T) in said first closed cooling loop (5) is above said first predetermined threshold temperature (T_{START}).

3. The system according to claim 1 or 2, wherein said flow control system is further arranged to cut off said cooling source (6) and said power conversion module (10) from said first closed cooling loop (5), such that said circulation fluid is directed to flow in a truncated closed cooling loop (5a) bypassing said cooling source (6) and said power conversion module (10), to provide a thermal energy input from said skid pipes (2) into said truncated closed cooling loop (5a).

4. The system according to any one of the preceding claims, wherein said flow control system is further arranged to cut off said power conversion module (10) from said first closed cooling loop (5) and said cooling source (6) when the measured temperature (T) in said first closed cooling loop (5) is above a second predetermined threshold temperature (T_{STOP}), such that said circulation fluid is directed to said cooling source (6) only.

5. The system according to claim 4, wherein said second predetermined threshold temperature (T_{STOP}) is in the range 110-140 °C, preferably about 120 °C.

6. The system according to any one of the preceding claims, wherein said circulation fluid is water.

7. The system according to any one of the preceding claims, wherein said first predetermined threshold temperature (T_{START}) is in the range 65-95 °C, preferably about 70 °C.

8. A steel production facility (1) comprising skid pipes (2) for supporting feedstock to be heated, a first closed cooling loop (5) comprising a circulation fluid which receives thermal energy from said skid pipes (2), a cooling source (6), and a system for recovery of thermal energy according to any one of the preceding claims.

9. The steel production facility (1) according to claim8, further comprising a skid pipe heat transferring loop (3) comprising a circulation fluid running through said skid pipes (2) and a heat exchanger (4) arranged to transfer thermal energy between said skid pipe heat transferring loop (3) and said first closed cooling loop (5).

10. A method for controlling input of thermal energy into a power conversion module (10) configured to work in a closed loop thermodynamic cycle and convert thermal energy into electricity, wherein said method comprises the steps of:
- arranging said power conversion module (10) in fluid communication with a first closed cooling loop (5) comprising a circulation fluid which receives thermal energy from skid pipes (2) in a steel production facility (1), and a cooling source (6) arranged in said first closed cooling loop (5);
- measuring a temperature (T) in said first closed cooling loop (5); and
- when said measured temperature (T) is below a first predetermined threshold temperature (T_{START}), cutting off said cooling source (6) from said first closed cooling loop (5), such that said circulation fluid flows exclusively into a hot side of said power conversion module (10), to provide a thermal energy input into said power conversion module (10).

11. The method according to claim 10, further comprising the step of:
- when said measured temperature (T) is above said first predetermined threshold temperature (T_{START}), directing a fluid flow from said cooling source (6) to a cold side of said power conversion module (10) in a second closed cooling loop (16), fluidly separated from said first closed cooling loop (5).

12. The method according to any one of claim 10 or 11, further comprising the step of:
- when said measured temperature (T) is above a second predetermined threshold temperature (T_{STOP}), cutting off said power conversion module (10) from said first closed cooling loop (5) and said cooling source (6), such that said circulation fluid is directed to said cooling source (6) only.

## Patentansprüche

1. System zur Rückgewinnung von Wärmeenergie aus einem ersten geschlossenen Kühlkreislauf (5) zur Kühlung von Gleitrohren (2) in einer Stahlproduktionsanlage (1), wobei der erste geschlossene Kühlkreislauf (5) ein Zirkulationsfluid, das Wärmeenergie von den Gleitrohren (2) aufnimmt, und eine Kühlquelle (6) umfasst, wobei das System umfasst:
- Mittel (17) zum Messen der Temperatur (T) in dem ersten geschlossenen Kühlkreislauf (5),
- ein Leistungsumwandlungsmodul (10), das so konfiguriert ist, dass es in einem geschlossenen thermodynamischen Kreislauf arbeitet und Wärmeenergie in Elektrizität umwandelt, wobei das Leistungsumwandlungsmodul (10) so eingerichtet ist, dass es mit dem ersten geschlossenen Kühlkreislauf (5) in strömungstechnischer Kommunikation mit der Kühlquelle (6) verbunden ist;
wobei das Leistungsumwandlungsmodul (10) weiter ein Durchflusssteuerungssystem umfasst, das eingerichtet ist, um die Eingabe von Wärmeenergie in das Leistungsumwandlungsmodul (10) zu steuern, **dadurch gekennzeichnet, dass** das Durchflusssteuerungssystem Leitungen zum Verbinden des Leistungsumwandlungsmoduls (10) mit dem ersten geschlossenen Kühlkreislauf (5) und der Kühlquelle (6) und Ventile (11, 12, 13a, 13b, 14) zum selektiven Schließen und Öffnen der Leitungen, um den Durchfluss des Zirkulationsfluids darin zu lenken, umfasst, wobei das Durchflusssteuerungssystem eingerichtet ist, um die Kühlquelle (6) von dem ersten geschlossenen Kühlkreislauf (5) zu trennen, wenn eine gemessene Temperatur (T) in dem ersten geschlossenen Kühlkreislauf (5) unter einer ersten vorbestimmten Schwellentemperatur (T_{START}) liegt, sodass das Zirkulationsfluid ausschließlich zu einer heißen Seite des Leistungsumwandlungsmoduls (10) gelenkt wird, um eine Wärmeenergieeingabe in das Leistungsumwandlungsmodul (10) bereitzustellen.

2. System nach Anspruch 1, wobei das Durchflusssteuerungssystem weiter eingerichtet ist, um den Fluiddurchfluss zwischen der Kühlquelle (6) und einer kalten Seite des Leistungsumwandlungsmoduls (10) in einem zweiten geschlossenen Kühlkreislauf (16) zu lenken, der strömungstechnisch von dem ersten geschlossenen Kühlkreislauf (5) getrennt ist, wenn die gemessene Temperatur (T) in dem ersten geschlossenen Kühlkreislauf (5) über der ersten vorbestimmten Schwellentemperatur (T_{START}) liegt.

3. System nach Anspruch 1 oder 2, wobei das Durchflusssteuerungssystem weiter eingerichtet ist, um die Kühlquelle (6) und das Leistungsumwandlungsmodul (10) von dem ersten geschlossenen Kühlkreislauf (5) zu trennen, sodass das Zirkulationsfluid so gelenkt wird, dass es in einem abgeschnittenen geschlossenen Kühlkreislauf (5a) unter Umgehung der Kühlquelle (6) und des Leistungsumwandlungsmoduls (10) fließt, um eine Wärmeenergieeingabe von den Gleitrohren (2) in den abgeschnittenen geschlossenen Kühlkreislauf (5a) bereitzustellen.

4. System nach einem der vorstehenden Ansprüche, wobei das Durchflusssteuerungssystem weiter eingerichtet ist, um das Leistungsumwandlungsmodul (10) von dem ersten geschlossenen Kühlkreislauf (5) und der Kühlquelle (6) zu trennen, wenn die gemessene Temperatur (T) in dem ersten geschlossenen Kühlkreislauf (5) über einer zweiten vorbestimmten Schwellentemperatur (T_{STOP}) liegt, sodass das Zirkulationsfluid nur zu der Kühlquelle (6) gelenkt wird.

5. System nach Anspruch 4, wobei die zweite vorbestimmte Schwellentemperatur (T_{STOP}) im Bereich von 110-140°C, vorzugsweise etwa 120°C, liegt.

6. System nach einem der vorstehenden Ansprüche, wobei das Zirkulationsfluid Wasser ist.

7. System nach einem der vorstehenden Ansprüche, wobei die erste vorbestimmte Schwellentemperatur (T _{START}) im Bereich von 65 bis 95°C, vorzugsweise etwa 70°C, liegt.

8. Stahlproduktionsanlage (1), umfassend Gleitrohre (2) zum Tragen von zu erwärmendem Ausgangsmaterial, einen ersten geschlossenen Kühlkreislauf (5), der ein Zirkulationsfluid umfasst, das Wärmeenergie von den Gleitrohren (2) aufnimmt, eine Kühlquelle (6) und ein System zur Rückgewinnung von Wärmeenergie nach einem der vorstehenden Ansprüche.

9. Stahlproduktionsanlage (1) nach Anspruch 8, weiter umfassend einen Gleitrohr-Wärmeübertragungskreislauf (3) mit einem Zirkulationsfluid, das durch die Gleitrohre (2) fließt, und einem Wärmetauscher (4), der eingerichtet ist, um Wärmeenergie zwischen dem Gleitrohr-Wärmeübertragungskreislauf (3) und dem ersten geschlossenen Kühlkreislauf (5) zu übertragen.

10. Verfahren zur Steuerung der Eingabe von Wärmeenergie in ein Leistungsumwandlungsmodul (10), das so konfiguriert ist, dass es in einem geschlossenen thermodynamischen Kreislauf arbeitet und Wärmeenergie in Elektrizität umwandelt, wobei das Verfahren die folgenden Schritte umfasst:
- Einrichten des Leistungsumwandlungsmoduls (10) in strömungstechnischer Kommunikation mit einem ersten geschlossenen Kühlkreislauf (5), der ein Zirkulationsfluid umfasst, das Wärmeenergie von Gleitrohren (2) in einer Stahlproduktionsanlage (1) aufnimmt, und einer Kühlquelle (6), die in dem ersten geschlossenen Kühlkreislauf (5) eingerichtet ist;
- Messen einer Temperatur (T) in dem ersten geschlossenen Kühlkreislauf (5); und
- wenn die gemessene Temperatur (T) unter einer ersten vorbestimmten Schwellentemperatur (T_{START}) liegt, Trennen der Kühlquelle (6) von dem ersten geschlossenen Kühlkreislauf (5), sodass das Zirkulationsfluid ausschließlich in eine heiße Seite des Leistungsumwandlungsmoduls (10) fließt, um eine Wärmeenergieeingabe in das Leistungsumwandlungsmodul (10) bereitzustellen.

11. Verfahren nach Anspruch 10, weiter umfassend den folgenden Schritt:
- wenn die gemessene Temperatur (T) über einer zweiten vorbestimmten Schwellentemperatur (T_{START}) liegt, Lenken eines Fluiddurchflusses von der Kühlquelle (6) zu einer kalten Seite des Leistungsumwandlungsmoduls (10) in einem zweiten geschlossenen Kühlkreislauf (16), der strömungstechnisch von dem ersten geschlossenen Kühlkreislauf (5) getrennt ist.

12. Verfahren nach einem der Ansprüche 10 oder 11, weiter umfassend den folgenden Schritt:
- wenn die gemessene Temperatur (T) über einer zweiten vorbestimmten Schwellentemperatur (T_{STOP}) liegt, Trennen des Leistungsumwandlungsmoduls (10) von dem ersten geschlossenen Kühlkreislauf (5) und der Kühlquelle (6), sodass das Zirkulationsfluid nur zu der Kühlquelle (6) gelenkt wird.

## Revendications

1. Système de récupération d'énergie thermique à partir d'une première boucle de refroidissement fermée (5) pour refroidir des tuyaux de glissement (2) dans une installation de production d'acier (1), ladite première boucle de refroidissement fermée (5) comprenant un fluide de circulation qui reçoit de l'énergie thermique desdits tuyaux de glissement (2), et une source de refroidissement (6), dans lequel ledit système comprend :
- des moyens (17) pour mesurer la température (T) dans ladite première boucle de refroidissement fermée (5),
- un module de conversion de puissance (10) configuré pour fonctionner dans un cycle thermodynamique en boucle fermée et convertir l'énergie thermique en électricité, dans lequel ledit module de conversion de puissance (10) est agencé pour être relié à la première boucle de refroidissement fermée (5) en communication fluidique avec la source de refroidissement (6) ;
dans lequel le module de conversion de puissance (10) comprend en outre un système de commande d'écoulement agencé pour commander l'entrée d'énergie thermique dans ledit module de conversion de puissance (10), **caractérisé en ce que** le système de commande d'écoulement comprend des conduits pour relier le module de conversion de puissance (10) à la première boucle de refroidissement fermée (5) et à la source de refroidissement (6), et des vannes (11, 12, 13a, 13b, 14) pour fermer et ouvrir sélectivement les conduits afin d'y diriger l'écoulement dudit fluide de circulation, dans lequel ledit système de commande d'écoulement est agencé pour couper ladite source de refroidissement (6) de ladite première boucle de refroidissement fermée (5) lorsqu'une température (T) mesurée dans ladite première boucle de refroidissement fermée (5) est inférieure à une première température de seuil prédéterminée (T_{START}), de sorte que ledit fluide de circulation soit dirigé exclusivement vers un côté chaud dudit module de conversion de puissance (10), pour fournir une entrée d'énergie thermique dans ledit module de conversion de puissance (10).

2. Système selon la revendication 1, dans lequel ledit système de commande d'écoulement est en outre agencé pour diriger un écoulement de fluide entre ladite source de refroidissement (6) et un côté froid dudit module de conversion de puissance (10) dans une seconde boucle de refroidissement fermée (16), fluidiquement séparée de ladite première boucle de refroidissement fermée (5), lorsque la température (T) mesurée dans ladite première boucle de refroidissement fermée (5) est supérieure à ladite première température de seuil prédéterminée (T_{START}).

3. Système selon la revendication 1 ou 2, dans lequel ledit système de commande d'écoulement est en outre agencé pour couper ladite source de refroidissement (6) et ledit module de conversion de puissance (10) de ladite première boucle de refroidissement fermée (5), de sorte que ledit fluide de circulation soit dirigé pour s'écouler dans une boucle de refroidissement fermée tronquée (5a) contournant ladite source de refroidissement (6) et ledit module de conversion de puissance (10), pour fournir une entrée d'énergie thermique depuis lesdits tuyaux de glissement (2) dans ladite boucle de refroidissement fermée tronquée (5a).

4. Système selon l'une quelconque des revendications précédentes, dans lequel ledit système de commande d'écoulement est en outre agencé pour couper ledit module de conversion de puissance (10) de ladite première boucle de refroidissement fermée (5) et de ladite source de refroidissement (6) lorsque la température (T) mesurée dans ladite première boucle de refroidissement fermée (5) est supérieure à une seconde température de seuil prédéterminée (T_{STOP}), de sorte que ledit fluide de circulation soit dirigé vers ladite source de refroidissement (6) uniquement.

5. Système selon la revendication 4, dans lequel ladite seconde température de seuil prédéterminée (T_{STOP}) est dans la plage de 110 à 140 °C, de préférence d'environ 120 °C.

6. Système selon l'une quelconque des revendications précédentes, dans lequel ledit fluide de circulation est de l'eau.

7. Système selon l'une quelconque des revendications précédentes, dans lequel ladite première température de seuil prédéterminée (T_{START}) est dans la plage de 65 à 95 °C, de préférence d'environ 70 °C.

8. Installation de production d'acier (1) comprenant des tuyaux de glissement (2) pour supporter une charge d'alimentation à chauffer, une première boucle de refroidissement fermée (5) comprenant un fluide de circulation qui reçoit de l'énergie thermique desdits tuyaux de glissement (2), une source de refroidissement (6), et un système de récupération d'énergie thermique selon l'une quelconque des revendications précédentes.

9. Installation de production d'acier (1) selon la revendication 8, comprenant en outre une boucle de transfert de chaleur de tube de glissement (3) comprenant un fluide de circulation s'écoulant à travers lesdits tubes de glissement (2) et un échangeur de chaleur (4) agencé pour transférer de l'énergie thermique entre ladite boucle de transfert de chaleur de tuyau de glissement (3) et ladite première boucle de refroidissement fermée (5).

10. Procédé de commande de l'entrée d'énergie thermique dans un module de conversion de puissance (10) configuré pour fonctionner dans un cycle thermodynamique en boucle fermée et convertir l'énergie thermique en électricité, dans lequel ledit procédé comprend les étapes consistant à :
- agencer ledit module de conversion de puissance (10) en communication fluidique avec une première boucle de refroidissement fermée (5) comprenant un fluide de circulation qui reçoit de l'énergie thermique à partir de tuyaux de glissement (2) dans une installation de production d'acier (1), et une source de refroidissement (6) agencée dans ladite première boucle de refroidissement fermée (5) ;
- mesurer une température (T) dans ladite première boucle de refroidissement fermée (5) ; et
- lorsque ladite température (T) mesurée est inférieure à une première température de seuil prédéterminée (T_{START}), couper ladite source de refroidissement (6) de ladite première boucle de refroidissement fermée (5), de sorte que ledit fluide de circulation s'écoule exclusivement dans un côté chaud dudit module de conversion de puissance (10), pour fournir une entrée d'énergie thermique dans ledit module de conversion de puissance (10).

11. Procédé selon la revendication 10, comprenant en outre l'étape consistant à :
- lorsque ladite température (T) mesurée est supérieure à ladite première température de seuil prédéterminée (T_{START}), diriger un écoulement de fluide de ladite source de refroidissement (6) vers un côté froid dudit module de conversion de puissance (10) dans une seconde boucle de refroidissement fermée (16 ), séparée fluidiquement de ladite première boucle de refroidissement fermée (5).

12. Procédé selon l'une quelconque des revendications 10 ou 11, comprenant en outre l'étape consistant à :
- lorsque ladite température (T) mesurée est supérieure à une seconde température de seuil prédéterminée (T_{STOP}), couper ledit module de conversion de puissance (10) de ladite première boucle de refroidissement fermée (5) et de ladite source de refroidissement (6), de sorte que ledit fluide de circulation soit dirigé vers ladite source de refroidissement (6) uniquement.
